# EUROPEAN PATENT APPLICATION

(11) **EP 0 841 794 A2**
(43) Date of publication of application: **13.05.1998**
(21) Application number: 97117627.6
(22) Date of filing: 11.10.1997
(51) Int. Cl.: H04M 1/03

(54) **Electrical connector for the handset of a telephone apparatus**

(30) Priority: 08.11.1996 DE 29619466 U
(71) Applicant: MOLEX INCORPORATED, Lisle Illinois 60532 (US)
(72) Inventor: Schempp, Otto, 74906 Bad Rappenau (DE)
(74) Representative: Blumbach, Kramer & Partner GbR

(57) **Abstract**

An electrical connector (1) for the handset (19) of a telephone apparatus with a connecting cable between the handset (19) and the telephone apparatus includes contacts on a casing (4) of the connector (1) for making an electrical connection with the contacts of an associated connector at the handset end of the connecting cable. A microphone (2) electrically connected to at least a portion of the contacts (9, 10) of the connector (1) forms a mechanical structural group with the casing (4) of the connector (1).

## Description

The invention relates to an electrical connector for the handset of a telephone apparatus with a connecting cable between the handset and the telephone apparatus, as set forth in the classifying portion of claim 1.

Although in the course of the considerable advances in the telecommunications area cable-less transmission such as for example in the case of cordless or cellular GSM-telephones is securing ever increasing segments of the market, conventional telephone equipment with a connecting cable between the handset and the telephone apparatus or unit itself still represents a very considerable market segment. In the course of opening up the telecommunication markets and in consideration of increasing competition however high-quality production at the lowest reasonable cost is an aspect of increasing significance, if not even being the key role in terms of success thereof on the market.

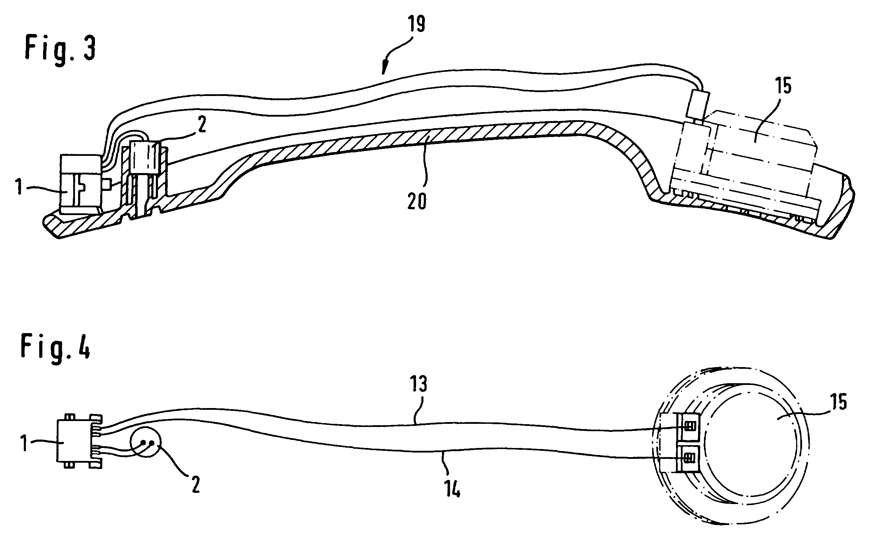

Hitherto it was the usual practice for example for firstly the speech unit with a microphone arranged therein and the earpiece with the loudspeaker unit associated therewith firstly to be arranged in the casing of the handset, for those components to be electrically connected to an electrical connector which was generally of a sleeve-like configuration, and for the casing of the handset then to be closed. In that procedure four individual conductors had to be mounted on at least two contact points per wire. An arrangement of that nature can be found for example in Figures 3 and 4 of the accompanying drawings.

For the purposes of avoiding increased manufacturing expenditure the attempt has also been made to employ prefabricated units, in other words ready-wired units of plug, microphone and earpiece were assembled in the handset. It was found in that situation however that individually laying generally four wires can cause difficulties as they had to be laid precisely in the casing to form a durable connection. The situation was alleviated by an improved version which involved the use of a flexible foil-type conductor. However foil-type conductors of that kind are cost-intensive to provide and in the prefabrication procedure generally require soldered connections which are time-consuming and consequently more expensive in terms of producing them and checking them.

The invention is based on the problem of designing a handset of the type set forth in the opening part of this specification in such a way that it is simpler to assemble, less expensive and more durable, and of providing an electrical connector which is suitable therefor.

That problem is solved in an extremely surprisingly simple fashion by the features of claims 1 and 10.

If, in accordance with the invention, a microphone electrically connected to at least a portion of the contacts of the connector forms a mechanical structural group with the casing of the connector, then the connector can be provided with the microphone in an automated procedure during the production of the connector, and the connector in conjunction with the microphone represents a structural group which is mechanically strong and stable and consequently simple to handle.

In addition, depending on the respective design configuration of the microphone, it is possible to omit the large-volume conventional speech unit or under some circumstances independent encapsulation for the microphone itself, thereby affording a further cost saving.

In addition the arrangement according to the invention makes it possible to considerably minimise the wiring complications involved in production of the handset, in which case on the one hand costs are reduced and on the other hand faults and rejects are decreased by virtue of all contacts being mechanically held.

Advantageously the casing of the connector forms a cavity for accommodating the microphone, while an opening or an acoustic passage connects the cavity for the microphone with the ambient atmosphere. That makes it possible for the connector casing which can preferably be fitted into a suitable associated receiving means of the handset casing already to provide for correct positioning of the microphone relative to the speech opening in the casing of the handset, when the connector is being fitted into position.

In a particularly advantageous manner the connector casing has retaining or detent means co-operable with associated holding means on the casing of the handset in order to hold the connector with the microphone mounted thereon in correctly aligned fixed position in the casing of the handset.

Advantageously the connector has further contacts which are connected to the loudspeaker of the earpiece of the handset. Prefabricated constructions with a connector, feed or supply lines and speech unit can have inexpensive flat cables for suitable contacts with cutter-type terminals.

An external resistor which can be used for adjusting the sensitivity of the respective microphone employed can also be carried on the connector, in which case the latter then has two further connections or terminals. With three further connections or terminals and corresponding internal wiring, then depending on the connection of the resistor it can be arranged either in series or parallel with respect to the microphone and can be used according to the respective requirements involved for impedance matching of the microphone and adjustment of its sensitivity,

If the resistor is arranged within the connector casing during the production procedure, it is advantageous to use an SMD-resistor and contacts associated therewith, in order to take account of small structural dimensions. In addition there may be further contacts of the connector with associated electrical wiring in order to permit volume adjustment of the earpiece. In that way, by means of an adjustable external resistor which can be arranged on the casing of the handset in such a way as to be accessible from the exterior, it is possible individually to set a volume level which is suitable and acceptable for use of the telephone.

The invention will be described hereinafter with reference to the accompanying drawings by means of a preferred embodiment thereof. In the drawings:
Figure 1 is a cross-sectional view through a part of a handset according to the invention, with the rear part of the casing of the handset removed,
Figure 2 is a plan view of the electrical connector according to the invention with microphone arranged therein and electrical connections to the earpiece,
Figure 3 is a cross-sectional view through a part of a conventional handset with the rear part of the casing of the handset removed, and
Figure 4 is a plan view of a conventional electrical connector with microphone arranged therein and electrical connections to the earpiece.

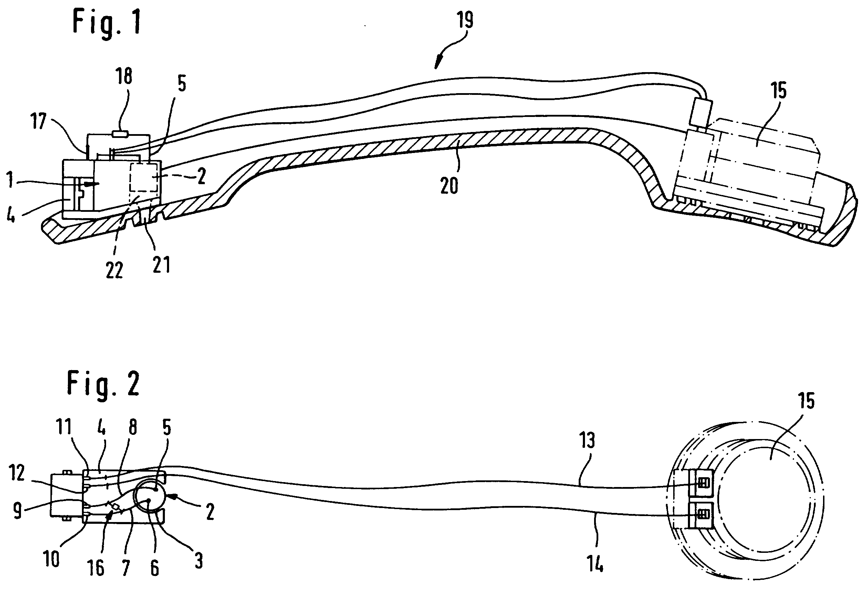

The invention will firstly be described in greater detail hereinafter with reference to Figure 1. It will be noted however that the same reference numerals are used to denote at least similar components in all the Figures.

Referring now to Figure 1, an electrical connector indicated at 1 at the left-hand side in Figure 1 contains a microphone 2 which is arranged in a cavity 3 in the casing 4 of the connector 1.

The cavity 3 provided in the casing 1 which is preferably made from injection-moulded material is open to the side and also upwardly and downwardly in the Figure. The cavity 3 permits the microphone which in this embodiment is already of encapsulated type to be clipped into place so that the microphone 2 is then held in a correctly aligned and fixed position.

References 5 and 6 in Figure 1 denote contacts of the microphone 2 while references 7 and 8 denote electrical feed lines which are secured to the microphone 2, and references 9 and 10 denote contacts of the connector 1.

It will be noted at this point that, in an alternative configuration from that shown, the microphone 2 can also already be fitted in the course of production of the connector 1, in which case then the contacts 5, 6 of the microphone 2 with the electric lines 7, 8 secured thereto as well as the contacts 9, 10 of the connector 1 can be arranged completely within the casing 4 of the connector 1.

In this last-mentioned embodiment there is no need for the microphone to have its own casing or independent encapsulation.

Contacts 11, 12 for the lines 13, 14 that go to the earpiece indicated at 15 are also arranged in the casing 4 of the connector 1.

For the purposes of adjusting the sensitivity of the microphone 2 a resistor 16 can be connected in parallel with the microphone 2, between the lines 7 and 8, in the manner shown in Figure 2.

For a microphone 2 which can be inserted from the exterior, further, outwardly extending connections can be arranged on the connector 1, which permit electrical connection to an externally arranged resistor 16.

If the resistor 16 is already fitted in the production procedure, preferably for a microphone which is associated therewith and which is to be inserted into the connector casing 4, it is advantageously possible to use SMB-components, in particular suitable contacts.

In order to be able to cover as wide a range as possible of usable microphones 2, in which respect not only their sensitivity but also their necessary impedance should be suitably matched, then instead of a continuous line 8 it can go to a further contact 17 as indicated in Figure 1 which provides the connection by way of an external resistor 18 to the microphone 2. The contact 17 which is illustrated in Figure 1 as emerging from the casing 4 can, in an alternative configuration, be disposed in the casing and can be in the form of an SMD-contact and thus permits the flexible use of various types of microphones, in particular in regard to automated production.

With further contacts which are not shown in Figures 1 and 2, between the connector 1 and an external adjustable resistor, by wiring the external resistor to the lines 13, 14, either in parallel or serial manner, it is possible to adjust the volume of the earpiece 15.

Although the jack-type connectors which are of substantially cuboidal shape in the form of a 'Western Plug' are excellently well suited, the invention is not restricted thereto. Thus for example when using the above-mentioned specific type of 'Western Plug' its forked contact elements can project into the connector casing 4 and, when suitable length dimensions are involved, can already serve for making contact with the connecting contacts 5, 6 of the microphone 2.

In a preferred embodiment, the casing 4 is of a plug-in design configuration, in other words it has portions which can be fitted into congruent portions of the casing 20 of the handset as indicated generally at 19 in Figure 1. A polygonal design configuration for the connector casing, for example of rectangular shape, with a laterally slit socket-like opening and contacts 9 to 12 accommodated therein can permit a plug member of a connecting cable to be laterally inserted from outside the handset casing 20, if the handset casing 20 is of a suitable configuration. In that case the connector 1 when positioned correctly and fixed in position holds the microphone 2 in such a way that it can communicate with the speech opening 21 by way of the acoustic passage indicated at 22 in Figure 1.

With the last-mentioned embodiment according to the invention, in a single assembly step, namely the step of latchingly inserting the connector 1 in the casing 20 of the handset 19, it is possible to provide access both for the external connection of a cable and also for the correct positioning of the connector 1 and the microphone 2.

In a further embodiment according to the invention the connector casing 4 includes retaining or detent elements (not shown) such as for example laterally projecting wedge-shaped protrusions which latch into associated fixing openings on the casing 20 of the handset 19.

In yet another further preferred embodiment the ends of the contacts 9, 10, 11 and 12 are provided with cutting terminal portions in order in a simple manner to permit a connection to be made with an associated flat cable.

Furthermore it is in accordance with the invention to produce a connection to the respectively associated contacts by soldering, crimping, screwing or the like.

### List of references

- 1: electrical connector
- 2: microphone
- 3: cavity
- 4: casing of the connector
- 5, 6: contacts of the microphone
- 7, 8: lines
- 9, 10, 11, 12,: contacts
- 13, 14: lines
- 15: earpiece
- 16: resistor
- 17: contact
- 18: resistor
- 19: handset
- 20: casing of the handset
- 21: speech opening
- 22: acoustic passage

## Claims

1. An electrical connector (1) for the handset (19) of a telephone apparatus with a connecting cable between the handset (19) and the telephone apparatus, including contacts arranged on a casing (4) of the connector (1) for making an electrical connection with the contacts of an associated connector disposed at the end of the connecting cable towards the handset (19), characterised in that a microphone (2) electrically connected to at least a portion of the contacts (9, 10) of the connector (1) forms a mechanical structural group with the casing (4) of the connector (1).

2. An electrical connector according to claim 1 characterised in that the casing (4) of the connector (1) forms a cavity (3) for the microphone (2), wherein an opening or an acoustic passage (22) connects the cavity (3) of the microphone (2) with the ambient atmosphere.

3. An electrical connector according to claim 1 or claim 2 characterised in that the connector casing (4) can be fitted into an associated receiving means of the handset casing (20) and in the inserted condition the opening or the acoustic passage (22) communicates with a speech opening (21) in the handset casing (20).

4. An electrical connector according to one of the preceding claims characterised in that the push-in connector casing (4) has retaining means which co-operate with associated holding means of the handset casing (20) in order to hold the connector (1) with the microphone (2) carried thereon in aligned relationship and fixed in position in the handset casing (20).

5. An electrical connector according to one of the preceding claims characterised in that the connector (1) has further contacts (11, 12) which can be connected to the loudspeaker of the earpiece (15) of the handset (19).

6. An electrical connector according to one of the preceding claims and further characterised by at least two further connections (17, 5) for an external resistor (18) which can be connected for adjusting the sensitivity of the microphone (2).

7. An electrical connector according to claim 6 characterised by at least one still further connection for a resistor (16, 18) by means of which the resistor (16, 18) can be connected in parallel or in series with the microphone (2).

8. An electrical connector according to one of claims 1 to 5 characterised by an electrical resistor (16) arranged in the connector casing (4) and connected in series or parallel with the microphone (2).

9. An electrical connector according to claim 8 characterised by contacts for receiving an SMD-resistor.

10. An electrical connector according to one of the preceding claims characterised by contacts for a further resistor for adjusting the volume of the earpiece (15).

11. An electrical connector according to one of the preceding claims characterised in that the connector (1) is connected to the earpiece (15) or a plug member associated therewith by means of a flat cable.

12. A handset (19) of a telephone apparatus with an electrical connecting cable between the handset (19) and the telephone apparatus, characterised by a connector (1) according to one of the preceding claims.
